# EUROPEAN PATENT SPECIFICATION

(11) **EP 2 526 067 B1**
(45) Date of publication and mention of the grant of the patent: **11.11.2015**
(21) Application number: 11710260.8
(22) Date of filing: 14.01.2011
(51) Int. Cl.: C02F 9/14, C02F 3/12, C02F 3/26, C02F 1/44, C02F 1/52, C02F 1/72

(54) **A PROCESS FOR THE THERMOPHILIC AEROBIC TREATMENT OF CONCENTRATED ORGANIC WASTE WATER AND THE RELATED PLANT**
VERFAHREN ZUR THERMOPHILEN AEROBEN BEARBEITUNG VON KONZENTRIERTEM ORGANISCHEM ABWASSER UND ENTSPRECHENDE ANLAGE
PROCÉDÉ DE TRAITEMENT AÉROBIE THERMOPHILE D'EAU RÉSIDUAIRE ORGANIQUE CONCENTRÉE ET INSTALLATION S'Y RAPPORTANT

(30) Priority: 22.01.2010 IT CR20100001
(43) Date of publication of application: 28.11.2012
(73) Proprietor: IDROCLEAN S.R.L., 24040 Casirate D'Adda (BG) (IT)
(72) Inventor: BERTANZA, Giorgio, I -25080 PUEGNAGO (BS) (IT); COLLIVIGNARELLI, Maria, Cristina, I-27036 MORTARA (PV) (IT); RAVASIO, Pier, Francesco, I-24030 TERNO D'ISOLA (BG) (IT); SANCANDI, Alberto, I-24047 TREVIGLIO (BG) (IT)
(74) Representative: Marcio', Paola
(86) International application number: PCT/IB2011/000065
(87) International publication number: WO 2011/089501

(56) References cited:
- CH-A- 539 585
- GB-A- 1 245 434
- JP-A- 8 252 595
- US-A- 3 961 078
- US-A1- 2004 159 607

## Description

This invention relates to the field of systems and plants for the waste water treatment.

More in detail, the invention concerns a process for the thermophilic aerobic treatment of concentrated organic waste water and a plant in which said process is implemented.

The best available techniques (BAT) in use today, as identified by currently applicable standards for plants for the chemical-physical and biological treatment of fluid waste, indicate an ample choice of suitable processes and plants.

Where possible, biological processes are generally preferred in the case of treating biodegradable organic sewage. A system with an aerobic process involving activated sludge is commonly used because it is the best known and considered reliable. Alternatives to the activated sludge process, such as systems using adherent biomass, cannot boast these characteristics.

Suitable processes include the following techniques in particular, which are classified as BAT:
- sedimentation/flocculation;
- microfiltration and ultrafiltration;
- reverse osmosis and nanofiltration;
- precipitation;
- chemical oxidation;
- aerobic treatments.

More in particular, thermophilic aerobic biological plants are commonly used to treat sewage with a high organic matter content.

Thermophilic aerobic biological systems (for treating sewage with a high organic matter content) are based on processes at temperatures higher than 45°C. To reach this temperature cost-effectively, it is generally possible to resort to one of two alternatives:
1. the use of already heated water coming from particular production processes, such as papermaking industries;
2. the use of sewage with a high content of organic matter; organic matter degradation reactions are exothermal, so the temperature valves can be maintained without needing to provide a source of heat, simply by ensuring certain conditions, i.e.:
   - a sufficient concentration of biodegradable organic matter;
   - an adequate thermal insulation of the reactor.

Finally, it is well known that fluidized-bed reactors can be used with an inert substance suitable to serve as a diffuse supporting medium for the adherent bacterial flora that develops during the biological process.

A particular problem when using thermophilic processes concerns the poor sedimentability characteristics of the sludge: this makes it difficult to clarify the effluent difficult and limits the efficiency of the treatment. The cause of the problem lies in the limited capacity of the biomass to form clumps, which in turn is due to a shortage of clump-forming bacteria, which find it difficult to develop in an environment that is not ideally suited to them, as in the case of biological reactors operating at high temperatures.

One known solution to overcome this problem is to adopt a filtering system (e.g. ultrafiltration) downstream from the fluidized-bed reactor in order to separate the biomass from the treated sewage. The resulting biological system, equipped with such a filtering unit, is called membrane biological reactor (MBR).

On the other hand, the problems deriving from the use of fluidised beds substantially relate to the need to artificially supply the inert substrate at the beginning of the process and also afterwards due to the entrainment of the material in the overflow of sludge passing through the outlet from the reactor.

The currently-used techniques and plants generally also have numerous other drawbacks, including:
- the need for large volumes and the occupation of large spaces;
- the potential to produce smelly gaseous emissions;
- a high sludge output;
- difficulties with treating scarcely biodegradable synthesis organic matter.

Document US 2004/159607 A1 discloses a process of aerobic treatment of sewage in mesophile conditions where granules of calcite are used as support for the aerobic micro-organisms.

Document JPA08232595 discloses the use of Ca compounds added in a processing method of organic nature sewage by an upflow type anaerobic sludge floor method, that react with the carbon dioxide generated by methane fermentation within a reactor, producing CaCO₃.

Aim of the present invention is a process for the thermophilic aerobic treatment of concentrated organic waste water and a plant in which said process is implemented, that relies on techniques classifiable as BAT, and that overcomes the problems still characterizing said conventional techniques.

In particular, aim of the invention is to offer a process based on a fluidised-bed reactor using a device of the MBR type that overcomes the problems of the sludge's sedimentability, wherein there is no more need to artificially supply the inert substance used as a diffuse supporting medium for the adherent bacterial flora that develops during the biological process.

Further aims include: reducing the volumes and the spaces necessary to implement the treatment process; avoiding the emission of smelly gases from the plant; reducing the output of sludge from the plant; and enabling the cost-effective treatment of scarcely biodegradable synthesis organic matter.

These aims are achieved by the present invention by means of a process for the thermophilic aerobic treatment of concentrated organic waste water according to the independent claim 1. Further features of the process are contained in the dependent claims 2-5. The invention also concerns a plant for the thermophilic aerobic treatment of concentrated organic waste water as claimed in the independent claim 6. Further features of the plant are contained in the dependent claims 7-10. In addition to the known advantages of using a thermophilic aerobic process with an adherent biomass, i.e. high reaction rates, reduced reactor volumes, flexibility, overload resistance, process stability, reduced outputs of already well stabilised sludge, more straightforward equipment in the plant than in conventional sludge treatment lines, the advantages of the procedure and of the plant according to the invention also include the following:
- the abatement of part of the carbon dioxide developed by the organic matter degradation process and its conversion into calcium carbonate due to its reaction with the lime added during the process; the degree to which the CO₂ developed by the treatment process is abated can be controlled by adjusting the quantity of lime supplied to the thermophilic reactor and the equivalent removal of the calcium carbonate, so as to stabilize the preset operating value for the total solids in suspension in the fluidized bed;
- the formation of calcium carbonate that enables a natural inert supporting medium to be obtained cost effectively for the adherent biomass, which does not need topping up;
- the containment of gaseous smelly emissions and their easier extraction thanks to the more limited dimensions of the reactor;
- the reduction of the gas flow rates involved and consequently of the stripping phenomena thanks to the use of pure oxygen instead of air, which also enables the system to be operated with very high dissolved oxygen concentrations (4-8 mg/L); values that could also be obtained using air insufflation systems, but the operating costs would be prohibitive. This equates to the creation of high concentration gradients, which act as a "driving force" for the transfer of oxygen between the liquid environment and the innermost parts of the clumps of sludge, which are generally poor in oxygen. The oxygen can penetrate inside the mass of the clumps of sludge much more efficiently than in air-insufflated systems. The microorganisms are thus ideally supplied with oxygen, so they can achieve the degradation of the organic matter contained in the sewage to maximum effect;
- the problem of the limited sedimentability of the thermophilic sludge is overcome thanks to the membrane filtering system (ultrafiltration) located downstream from the "natural" fluidised-bed thermophilic biological system, which can also be followed by other treatments of known type;
- inhibition of the pathogens, an aspect that may be fundamental in the treatment of certain types of sewage, such as those deriving from animal husbandry activities;
- the opportunity to retrieve heat;
- the development of bacteria suitable for the treatment process irrespective of the morphology and clumping capacity of the sludge, which leads to more effective biodegradation levels;
- a high capacity for degradation even of synthesis molecules, which are not easily biodegradable in conventional biological plants;
- the effluent from the thermophilic reactor is suitable for subsequent mesophilic biological treatment;
- the sludge coming from the thermophilic reactor can be reused in farming applications because it consists mainly of calcium carbonate (which has a natural corrective and stabilising action on soil pH, even in areas with acid rains) and of stabilised organic matter containing no pathogens, accumulable bioresistant organic matter, and heavy metals.

The advantages of the invention will become more evident from the description that follows, in which preferred embodiments are described as non-limiting examples with the aid of the figures, wherein:
Fig. 1 schematically shows the basic concept behind the process and the plant according to the invention;
Figs. 2, 3, 4, 5 show examples of more complex variants of the process illustrated in Fig. 1;
Fig. 6 shows a detail of the plant for implementing the basic process according to the invention;
Fig. 7 provides experimental data on the monthly efficiency in removing the COD, obtained using the processing options shown in Figs. 1-2 and 3.
Fig. 8 compares the experimental data for the COD loads in the water at the thermophilic reactor inlet and after its abatement in a reactor made according to the invention, pooled for two monitoring periods.

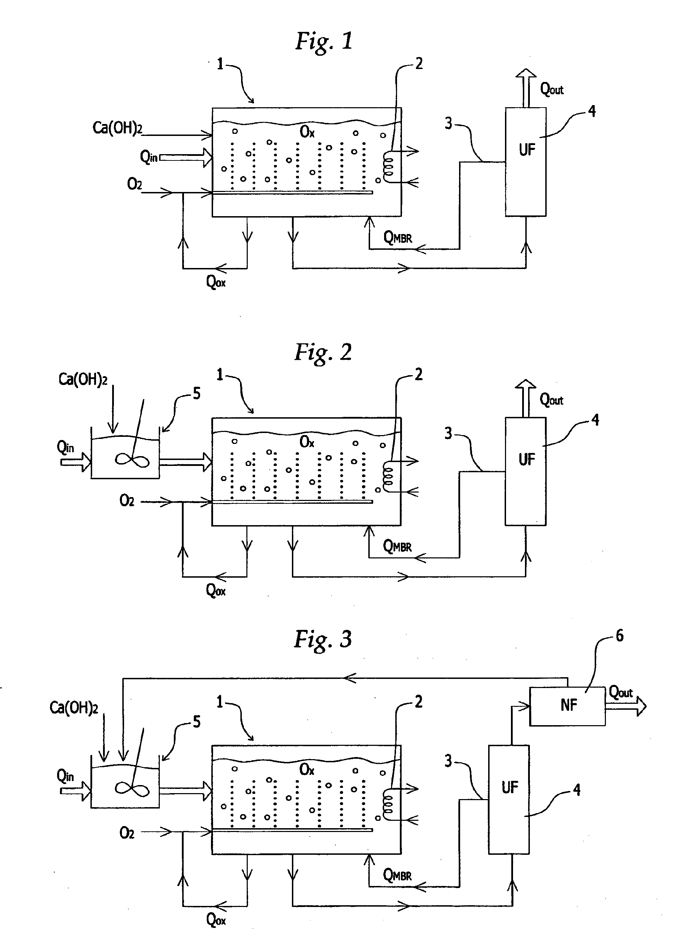

With reference to Figure 1, the basic concentrated organic waste water treatment process comprises the following steps:
- said waste water Q_{IN} is fed for fluidized-bed thermophilic aerobic biological treatment inside a closed reactor 1 with a system for thermostatic temperature control 2 based on an internal or external heat exchanger (using hot water, for instance), and a hydraulic recirculation system 3;
- said water subsequently undergoes an ultrafiltration treatment 4;
- pure oxygen O₂ is insufflated inside said reactor 1;
- lime Ca(OH)₂ is provided for the fluidized-bed thermophilic aerobic biological treatment;
- said treated waste water Q_{OUT} is subsequently discharged.

The lime Ca(OH)₂ available in the reactor 1 is suitable for forming a natural inert supporting medium consisting of microparticles of calcium carbonate CaCO₃ by means of a process of carbonation with carbon dioxide CO₂ generated by the degradation of the organic substrate in the biological process. Said microparticles are suitable for providing a considerable surface area arranged for allowing development of an adherent aerobic bacterial flora.

The ultrafiltration treatment 4, which is achieved with the membrane equipment of known type, enables the biomass to be kept inside the reactor 1 while the flow Q_{OUT} of treated water is discharged.

The lime Ca(OH)₂ is dosed either directly at the thermophilic biological treatment step, as shown in Figure 1, or at a previous chemical-physical re-treatment step inside a mix contact reactor 5, as shown in Figure 2.

In a further variant of the process shown in Figure 3, there is an nanofiltration treatment 6 conducted according to a known technique downstream from the ultrafiltration treatment 4.

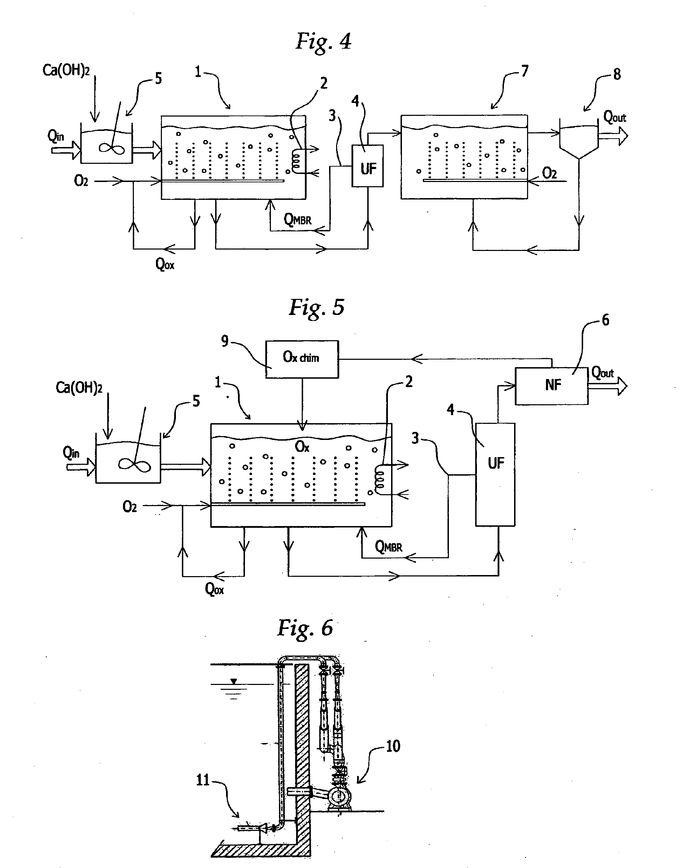

Figure 4 shows another variant of the process, wherein a mesophilic activated sludge treatment comprising a treatment step in a mesophilic reactor 7 and a sedimentation step in a sedimentation tank 8 is adopted as an alternative to the membrane type nanofiltration system 6 in series with the ultrafiltration treatment 4.

The combined thermophilic/mesophilic biological treatment enables a further reduction in COD and BOD₅ of approximately 40% and 80%, respectively.

Figure 5 shows a variant, as a further example, wherein a chemical oxidation treatment OX 9 is inserted on the recirculation line carrying the concentrate coming from nanofiltration 6, the object of which is to increase the biodegradability of the sewage and consequently enable its recirculation in the biological reactor 1 rather than in the chemical-physical treatment compartment 5. The treatment 9 may be of known type, e.g. with the addition of nitrogen or with a process based on hydrogen peroxide and UV radiation.

The chemical oxidation treatment could also be included in other points of the plant (in the basic configuration of Fig. 1, or in one of the variants of Figs. 2-4), also for the purpose of protecting the second (mesophilic) biological treatment against any incoming toxic/inhibiting matter and/or to improve the efficiency of the removal of organic matter, and/or to increase the biodegradability of the sewage.

With reference to the figures, a description is given below of a plant that implements the basic process for the thermophilic aerobic treatment of concentrated organic waste water, together with the corresponding alternative solutions and some data on the efficiency achieved.

Remarkable results were obtained using a biological tank 1 operating in thermophilic conditions (T > 45°C) maintained by means of a heat exchanger 2 and made of reinforced concrete with walls 30 cm thick covered with prefabricated panels in order to contain the smells and maintain the temperature.

The thermophilic biological reactor 1 has a surface area of 267 m² (21 m x 12.8 m) and it is 5.3 m high, 1.5 m of which are below ground, providing a total useful volume of approximately 1000 m³.

The biological reactor 1 is fed with an incoming flow Q_{IN} at a rate of 8.3 m³/h and has a recirculating flow Q_{MBR} (at a rate) of 120 m³/h coming from the ultrafiltration treatment 4, thus constituting a MBR type treatment system.

The biological oxidation system uses pure oxygen (added in the form of microbubbles using the known OXY-DEP system); this ensures an effective oxidation, reducing the stripping action of the smelly gases, and enabling peak oxygen demands due to overloading to be met.

With reference in particular to Figure 6, the pure oxygen is injected directly into static mixers 10 (Q_{O2}, 75 m³/h) so as to oversaturate the recirculating sewage inside them at a flow rate Q_{OX} of 300 m³/h, both to guarantee the supply to the fluidized bed and to enable the delivery of oxygen to the reactor 1. The fluid thus contains microbubbles of oxygen finely dispersed within its mass in larger quantities than in conventional systems.

The sewage thus enriched is then returned to the tank through the liquid-liquid ejectors 11, in sufficient quantity to bring the whole flow of fluid leaving the ejector up to the saturation values corresponding to the pressure of the hydrostatic head in the tank.

This makes it possible to exploit said hydrostatic head to keep the oxygen in contact with the fluid for as long as possible, and also to ensure the adequate agitation of the sewage and of the fluidized bed with an even distribution of the dissolved gas.

The thermophilic treatment is fed with a supply of waste water Q_{IN} from industrial processes or the percolate from landfills at a neutral pH with a high content of organic matter, nitrogen and other liquid waste.

The following table shows the minimum, maximum and mean levels of the main polluting parameters characteristic of the sewage delivered to the thermophilic biological compartment.

| **Parameter** | **Unit of measure** | **Value** | | |
|---|---|---|---|---|
| | | **mean** | **min** | **max** |
| Flow rate | [m³/d] | 249 | 150 | 516 |
| COD | [mg/l] | 24,000 | 15,723 | 39,300 |
| N-NH₄⁺ | [mg/l] | 250 | 126 | 450 |
| N-NOₓ⁻ | [mg/l] | 1,190 | 620 | 1,560 |
| Cu | [mg/l] | 0.03 | not recordable | 0.18 |
| Cr | [mg/l] | 0.007 | not recordable | 0.07 |
| Ni | [mg/l] | 3.8 | 2 | 6.7 |
| Zn | [mg/l] | 0.73 | 0.3 | 1.4 |

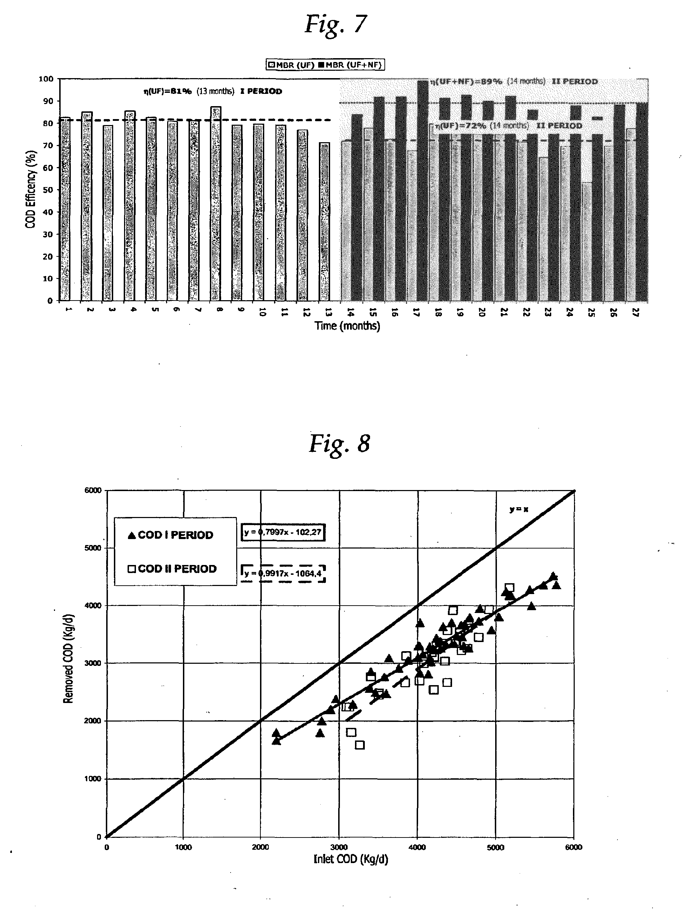

Figure 7 shows the monthly efficiency in removing the COD and the mean values relating to two monitoring periods. These efficiencies were achieved using a plant of the MBR type, as shown in Figure 2, and a plant of the type shown in Figure 3. The efficiencies obtained were as follows:
in the former case (Ox + UF), the efficiency in removing the COD was 81% in the first period and 72% in the second;
in the latter case (Ox + UF + NF), the efficiency in removing the COD was 89% in the second test period only.

Figure 8 shows a comparison between the COD loads at the inlet and after abatement in the thermophilic reactor during the above-mentioned two monitoring periods. Clearly, despite the increment in the organic load at the inlet, the abated organic load remains nearly the same.

## Claims

1. A process for the thermophilic aerobic treatment of waste water comprising the following steps:
- said waste water is fed for fluidized-bed thermophilic aerobic biological treatment, inside a closed reactor (1), provided with a thermostat control system (2) and with a hydraulic recirculation system (3);
- said water is then submitted to an ultrafiltration treatment (4);
- said treated waste water is subsequently discharged;
- pure oxygen O₂ is insufflated inside said reactor (1);
wherein said waste water is of the concentrated organic type and said process also comprises the following step:
- lime Ca(OH)₂ is provided for the fluidized-bed thermophilic aerobic biological treatment,
wherein said lime Ca(OH)₂ is arranged for forming, by means of a process of carbonation with carbon dioxide CO₂ generated by the degradation of the organic substrate in the biological aerobic process, a natural inert supporting medium consisting of microparticles of calcium carbonate CaCO₃, wherein said microparticles are arranged for enabling the development thereon of an adherent aerobic bacterial flora, and said microparticles covered by said adherent aerobic bacterial flora, separated by means of said ultrafiltration treatment (4), are, at least partially, reintroduced into said reactor (1) by means of said hydraulic recirculation system (3).

2. A process according to claim 1, **characterized in that** the lime Ca(OH)₂ is dosed directly at the thermophilic biological treatment step or at a previous chemical and physical pre-treatment step.

3. A process according to claim 1, **characterized in that** there is a nanofiltration treatment (6) downstream from the ultrafiltration treatment (4).

4. A process according to claim 1, **characterized in that**, after the ultrafiltration step (4), it comprises an aerobic treatment in mesophilic conditions (7) and a gravity sedimentation treatment (8).

5. A process according to any of the previous claims, **characterized in that** it comprises a chemical oxidation process (9) taking effect on at least one hydraulic flow.

6. A plant for the thermophilic aerobic treatment of waste water comprising:
- a closed reactor (1) provided with an inlet and an outlet for said waste water, and with thermostat control means (2), and means (3) for inducing a recirculating flow arranged for fluidizing a granular material contained inside said reactor, wherein said granular material is arranged for serving as an inert supporting medium for an adherent bacterial flora that implements process of fluidized-bed thermophilic aerobic biological treatment;
- an ultrafiltration device (4) connected to the outlet of said reactor;
- means (10,11) for insufflating pure oxygen O₂ inside said reactor, wherein said waste water is of the concentrated organic type and said system comprises:
- means for supplying lime Ca(OH)₂ to said reactor,
wherein said granular material comprises microparticles of calcium carbonate CaCO₃, produced naturally by the carbonation of the lime Ca(OH)₂ with the carbon dioxide CO₂ generated by the degradation of the organic substrate in the biological aerobic process, and said means (3) are arranged for reintroducing, at least partially, said granular material, covered by said adherent bacterial flora, separated by means of said ultrafiltration device (4), into said reactor (1).

7. A plant according to claim 6, **characterized in that** it comprises a complete mix contact reactor (5) in which lime Ca(OH)₂ is dosed.

8. A plant according to claim 6, **characterized in that** a nanofiltration device (6) is connected downstream from the ultrafiltration device (4).

9. A plant according to claim 6, **characterized in that** a device (7) for aerobic treatment in mesophilic conditions and a gravity sedimentation device (8) are connected downstream from the ultrafiltration device (4).

10. A plant according to any of the previous claims from 6 to 9, **characterized in that** it comprises a chemical oxidation device (9) taking effect on at least one hydraulic flow.

## Patentansprüche

1. Ein Prozess für die thermophile aerobe Behandlung von Abwasser, der die folgenden Schritte umfasst:
- besagtes Abwasser wird für ein thermophiles aerobes biologisches Wirbelbett-Verfahren in einen geschlossenen Reaktor (1), der mit einem Thermostat-Kontrollsystem (2) und mit einem hydraulischen Dauerumlaufsystem (3) versehen ist, geleitet;
- besagtes Wasser wird dann einem Ultrafiltrationsverfahren (4) unterzogen;
- besagtes behandeltes Abwasser wird anschließend abgeleitet;
- reiner Sauerstoff O₂ wird in besagten Reaktor (1) geblasen;
worin besagtes Abwasser des konzentrierten organischen Typs ist und besagter Prozess auch folgenden Schritt umfasst:
- Calciumhydroxid Ca(OH)₂ wird für das thermophile aerobe biologische Wirbelbett-Verfahren zugeführt,
wobei besagtes Calciumhydroxid Ca(OH)₂ mittels eines Karbonisierungsprozesses mit Kohlendioxid CO₂, das durch den Abbau des organischen Substrats im biologischen aeroben Verfahren entsteht, ein natürliches neutrales Trägermedium bildet, bestehend aus Mikropartikeln von Calciumcarbonat CaCO₃, wobei besagte Mikropartikel so angeordnet sind, dass sich eine darauf haftende aerobe bakterielle Flora entwickeln kann, und besagte Mikropartikel, bedeckt durch besagte haftende aerobe bakterielle Flora, abgeschieden durch besagtes Ultrafiltrationsverfahren (4), zumindest teilweise, in besagten Reaktor (1) mittels des besagten hydraulischen Dauerumlaufsystems (3) wiedereingeführt werden.

2. Ein Prozess gemäß Anspruch 1, **gekennzeichnet durch** die Tatsache dass das Calciumhydroxid Ca(OH)₂ im thermophilen biologischen Verfahrensschritt oder in einem vorhergehenden chemischen und physischen Vorbehandlungsschritt direkt dosiert wird.

3. Ein Prozess gemäß Anspruch 1, **gekennzeichnet durch** die Tatsache, dass ein Nanofiltrationsverfahren (6) stromabwärts des Ultrafiltrationsverfahrens (4) vorhanden ist.

4. Ein Prozess gemäß Anspruch 1, **gekennzeichnet durch** die Tatsache, dass er nach dem Ultrafiltrationsschritt (4) ein aerobes Verfahren in einem mesophilen Zustand (7) und ein Gravitations-Sedimentationsverfahren (8) umfasst.

5. Ein Prozess gemäß einem jeglichen der vorhergehenden Ansprüche, **gekennzeichnet durch** die Tatsache, dass er ein chemisches Oxidationsverfahren (9), das bei zumindest einem hydraulischen Fluss inkrafttritt, umfasst.

6. Eine Anlage für die thermophile aerobe Behandlung von Abwasser, umfassend:
- einen geschlossenen Reaktor (1), versehen mit einem Einlass und einem Auslass für besagtes Abwasser, und mit thermostatischen Kontrollvorrichtungen (2) sowie Vorrichtungen (3), um einen Dauerumlauf zu erzeugen, der ein granulares Material in dem besagten Reaktor verflüssigt, wobei besagtes granulares Material so angeordnet ist, dass es als neutrales Trägermedium für eine haftende bakterielle Flora dient, die ein thermophiles aerobes biologisches Wirbelbett-Verfahren implementiert;
- eine Ultrafiltrationsvorrichtung (4) verbunden mit dem Auslass des besagten Reaktors;
- Vorrichtungen (10,11), um reinen Sauerstoff O₂ in besagten Reaktor zu blasen, worin besagtes Abwasser des konzentrierten organischen Typs ist und besagtes System umfasst:
- Vorrichtungen, um besagtem Reaktor Calciumhydroxid Ca(OH)₂ zuzuführen,
wobei besagtes granulares Material Mikropartikel von Calciumcarbonat CaCO₃ umfasst, die natürlich erzeugt werden durch die Karbonisierung des Calciumhydroxids Ca(OH)₂ mit dem Kohlendioxid CO₂, das durch den Abbau des organischen Substrats im biologischen aeroben Verfahren entsteht, und besagte Vorrichtungen (3) so angeordnet sind, dass sie, zumindest teilweise, besagtes granulares Material, bedeckt durch besagte haftende bakterielle Flora, abgeschieden durch besagte Ultrafiltrationsvorrichtung (4), in besagten Reaktor (1) wiedereinführen.

7. Eine Anlage gemäß Anspruch 6, **gekennzeichnet durch** die Tatsache, dass sie einen vollständigen Mix-Kontakt-Reaktor (5) umfasst, in dem Calciumhydroxid Ca(OH)₂ dosiert wird.

8. Eine Anlage gemäß Anspruch 6, **gekennzeichnet durch** die Tatsache, dass eine Nanofiltrationsvorrichtung (6) stromabwärts der Ultrafiltrationsvorrichtung (4) verbunden ist.

9. Eine Anlage gemäß Anspruch 6, **gekennzeichnet durch** die Tatsache, dass eine Vorrichtung (7) zu einer aeroben Behandlung in einem mesophilen Zustand und eine Gravitations-Sedimentations-Vorrichtung (8) stromabwärts der Ultrafiltrationsvorrichtung (4) verbunden sind.

10. Eine Anlage gemäß einem jeglichen der vorherigen Ansprüche von 6 bis 9, **gekennzeichnet durch** die Tatsache, dass sie eine chemische Oxidationsvorrichtung (9) umfasst, die bei zumindest einem hydraulischen Fluss wirksam wird.

## Revendications

1. Procédé de traitement aérobie thermophile d'eau résiduaire organique comprenant les étapes suivantes:
- ladite eau résiduaire organique est alimentée pour le traitement biologique aérobie thermophile à lit fluidisé, à l'intérieur d'un réacteur clos (1), doté d'un système de contrôle à thermostat (2) et d'un système de recirculation hydraulique (3);
- ladite eau est ensuite soumise à un traitement par ultrafiltration (4);
- ladite eau résiduaire organique est ensuite évacuée;
- de l'oxygène pur O₂ est insufflé à l'intérieur dudit réacteur (1);
où ladite eau résiduaire organique est de type organique concentré et ledit procédé comprend également l'étape suivante:
- de la chaux Ca(OH)₂ est prévue pour le traitement biologique aérobie thermophile à lit fluidisé,
où ladite chaux Ca(OH)₂ est disposée de manière à former, au moyen d'un processus de carbonatation avec du dioxyde de carbone CO₂ généré par la dégradation du substrat organique dans le procédé aérobie biologique, un milieu de support inerte naturel composé de microparticules de carbonate de calcium CaCO₃, où lesdites microparticules sont disposées de manière à permettre le développement sur celles-ci d'une flore bactérienne aérobie adhérente, et lesdites microparticules couvertes par ladite flore bactérienne aérobie adhérente, séparées au moyen dudit traitement d'ultrafiltration (4), sont, au moins partiellement, réintroduites dans ledit réacteur (1) au moyen dudit système de recirculation hydraulique (3).

2. Procédé selon la revendication 1, **caractérisé par le fait que** la chaux Ca(OH)₂ est dosée directement à l'étape de traitement biologique thermophile ou à une étape précédente de prétraitement chimique et physique.

3. Procédé selon la revendication 1, **caractérisé par le fait qu'**un traitement de nanofiltration (6) existe en aval du traitement d'ultrafiltration (4).

4. Procédé selon la revendication 1, **caractérisé par le fait que**, après l'étape d'ultrafiltration (4), il comprend un traitement aérobie en conditions mésophiles (7) et un traitement de sédimentation par gravité (8).

5. Procédé selon l'une des revendications précédentes, **caractérisé par le fait qu'**il comprend un processus d'oxydation chimique (9) prenant effet sur au moins un flux hydraulique.

6. Une installation pour le traitement aérobie thermophile d'eau résiduaire organique comprenant:
- un réacteur clos (1) doté d'une entrée et d'une sortie pour ladite eau résiduaire organique, et de moyens de contrôle à thermostat (2), et de moyens (3) pour induire un flux de recirculation disposés de manière à fluidiser un matériau granulaire contenu à l'intérieur dudit réacteur, où ledit matériau granulaire est disposé de manière à servir de milieu de support inerte pour une flore bactérienne adhérente qui implémente un processus de traitement biologique aérobie thermophile à lit fluidisé;
- un dispositif d'ultrafiltration (4) raccordé à la sortie dudit réacteur;
- des moyens (10,11) pour insuffler de l'oxygène pur O₂ à l'intérieur dudit réacteur, où ladite eau résiduaire organique est de type organique concentré et ledit système comprend:
- des moyens pour fournir de la chaux Ca(OH)₂ audit réacteur,
où ledit matériau granulaire comprend des microparticules de carbonate de calcium CaCO₃, produites naturellement par la carbonatation de la chaux Ca(OH)₂ avec le dioxyde de carbone CO₂ généré par la dégradation du substrat organique dans le processus aérobie biologique, et lesdits moyens (3) sont disposé de manière à réintroduire, au moins partiellement, ledit matériau granulaire, couvert par ladite flore bactérienne adhérente, séparé au moyen dudit dispositif d'ultrafiltration (4), dans ledit réacteur (1).

7. Installation selon la revendication 6, **caractérisée par le fait qu'**elle comprend un réacteur de contact à mélange complet (5) dans lequel est dosée la chaux Ca(OH)₂.

8. Installation selon la revendication 6, **caractérisée par le fait qu'**un dispositif de nanofiltration (6) est raccordé en aval du dispositif d'ultrafiltration (4).

9. Installation selon la revendication 6, **caractérisée par le fait qu'**un dispositif (7) pour le traitement aérobie dans des conditions mésophiles et un dispositif de sédimentation par gravité (8) sont raccordés en aval du dispositif d'ultrafiltration (4).

10. Installation selon l'une des revendications 6 à 9 précédentes, **caractérisée par le fait qu'**elle comprend un dispositif d'oxydation chimique (9) prenant effet sur au moins un flux hydraulique.
